**Europäisches Patentamt**

**European Patent Office**

**Office européen des brevets**

(19)

(11) Numéro de publication : **0 299 850 B1**

(12)

# FASCICULE DE BREVET EUROPEEN

(45) Date de publication du fascicule du brevet :
**29.05.91 Bulletin 91/22**

(51) Int. Cl.$^5$ : **F16J 3/04, F16J 15/52**

(21) Numéro de dépôt : **88401761.7**

(22) Date de dépôt : **06.07.88**

(54) **Joint d'étanchéité à soufflet.**

(30) Priorité : **06.07.87 FR 8709898**

(43) Date de publication de la demande :
**18.01.89 Bulletin 89/03**

(45) Mention de la délivrance du brevet :
**29.05.91 Bulletin 91/22**

(84) Etats contractants désignés :
**DE GB IT**

(56) Documents cités :
**FR-A- 2 139 380**
**FR-A- 2 165 022**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Caruel Michel**
**98, rue Pierre Brossolette**
**92320 Chatillon s/s Bagneux (FR)**

(74) Mandataire : **Boivin, Claude**
**9, rue Edouard-Charton**
**F-78000 Versailles (FR)**

## Description

La présente invention concerne un joint d'étanchéité à soufflet destiné à être interposé entre un arbre et un élément extérieur qui entoure l'arbre, par exemple le carter d'un mécanisme de direction à crémaillère, pour assurer l'étanchéité à l'eau et à l'air du mécanisme, retenir une certaine quantité de graisse, et résister à un effort axial d'arrachement.

Le plus souvent, ces joints sont engagés sur une partie externe d'un tube cylindrique faisant partie de l'élément extérieur, ce qui présente l'inconvénient de nécessiter un encombrement plus important, pour des réalisations particulières telles que des carters de direction moulés. On connait également des joints à engagement intérieur, mais les modes de réalisation jusqu'à présent connus des joints de ce genre nécessitent de rapporter une pièce auxiliaire dans l'élément extérieur pour maintenir le joint.

La présente invention a pour objet un joint d'étanchéité à soufflet à engagement intérieur, qui ne nécessite pas de pièce auxiliaire.

On connait en particulier des joints de ce genre qui comportent des moyens d'engagement et d'arrêt coopérant avec une gorge formée à l'intérieur de l'alésage de l'élément extérieur, les moyens d'arrêt étant constitués par des crans formés sur l'extérieur d'un manchon cylindrique prolongeant le soufflet et destinés à coopérer avec la gorge alors que les moyens d'engagement sont constitués par une rampe formée sur les crans, inclinée vers l'intérieur du manchon et destinée à coopérer avec un chanfrein réalisé à l'extrémité ouverte de l'alésage de l'élément extérieur. Un tel joint est décrit dans le document FR-A-2 139 380. Le joint selon l'invention est caractérisé en ce que les crans sont séparés les uns des autres par des alvéoles, chaque alvéole ayant la forme d'une portion de cône et sa face concave tournée vers l'extérieur de manière à permettre une déformation élastique du manchon lors de l'engagement de ce dernier à l'intérieur de l'alésage de l'élément extérieur.

On a décrit ci-après, à titre d'exemple non limitatif, un mode de réalisation du joint selon l'invention, avec référence au dessin annexé dans lequel :

La Figure 1 est une vue en coupe axiale du joint interposé entre un arbre et un élément extérieur;

La Figure 2 est une vue en élévation du joint ;

La Figure 3 est une vue en perspective d'une partie de ce joint.

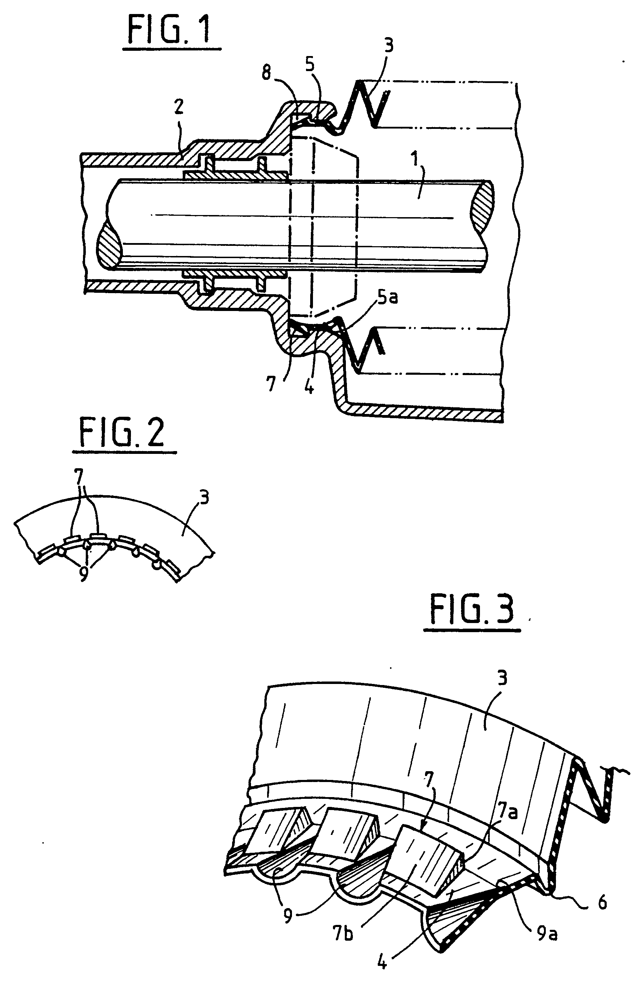

A la Figure 1, on voit un arbre 1 et un élément extérieur 2 qui entoure cet arbre et est constitué par exemple par le carter cylindrique d'un mécanisme de direction à crémaillère. L'étanchéité est assurée par un joint à soufflet 3 qui est interposé entre l'arbre 1 et l'élément 2.

Le soufflet 3 est prolongé du côté de l'élément 2 par un manchon cylindrique 4 dont le diamètre extérieur est sensiblement égal au diamètre d'une portée 5 ménagée dans l'élément extérieur 2. Une gorge 6 est prévue entre ce manchon et le premier pli du soufflet. Sur la face extérieure de ce manchon sont formés des crans 7, de section triangulaire, dont la face arrière 7a est sensiblement perpendiculaire à l'axe du soufflet alors que sa face avant 7b est oblique et orientée de façon que son diamètre aille en diminuant vers l'extrémité du manchon 4. L'élément extérieur 2 comporte derrière la portée 5 une gorge 8, de section rectangulaire dans laquelle les crans 7 peuvent s'engager. La portée 5 présente, à son extrémité ouverte, un chanfrein annulaire 5a de même pente que les faces 7b des crans 7.

Les crans 7 sont séparés les uns des autres par des alvéoles 9. Chacune de ces alvéoles présente la forme d'une portion de cône ayant sa face concave tournée vers l'extérieur et obtenue en coupant un cône par un plan passant par le sommet de ce cône; le sommet 9a de l'alvéole se trouve sur le cercle constituant l'intersection des faces arrière 7a des crans 7 avec le manchon cylindrique 4.

Lorsqu'on engage le joint à l'intérieur de la portée 5, les faces obliques des crans coopèrent avec le chanfrein 5a pour assurer le resserrement élastique du manchon cylindrique 4, rendu possible par la présence des alvéoles 9. Lorsque les crans 7 ont atteint la gorge 8, le joint reprend sa forme initiale ; la face arrière 7a des crans vient en butée contre la gorge 8 et s'oppose ainsi à un effort d'arrachement.

En fonctionnement, sous l'action d'un effort d'arrachement le soufflet 3 se déforme, mais ses déformations ne peuvent se transmettre au manchon 4, la gorge 6 les arrêtant.

## Revendications

1. Joint d'étanchéité à soufflet (3) destiné à être interposé entre un arbre (1) et un élément extérieur (2) qui entoure l'arbre, le soufflet (3) comportant des moyens d'engagement et d'arrêt coopérant avec une gorge (8) formée à l'intérieur de l'alésage de l'élément extérieur, les moyens d'arrêt étant constitués par des crans (7) formés sur l'extérieur d'un manchon cylindrique (4) prolongeant le soufflet (3) et destinés à coopérer avec la gorge (8) alors que les moyens d'engagement sont constitués par une rampe (7b) formée sur les crans (7), inclinée vers l'intérieur du manchon et destinée à coopérer avec un chanfrein (5a) réalisé à l'extrémité ouverte de l'alésage de l'élément extérieur (2),

caractérisé en ce que les crans (7) sont séparés les uns des autres par des alvéoles (9), chaque alvéole ayant la forme d'une portion de cône et sa face concave tournée vers l'extérieur, de manière à permettre une déformation élastique du manchon (4) lors de l'engagement de ce dernier à l'intérieur de l'alésage de l'élément extérieur.

2. Joint selon la revendication 1, caractérisé en ce que les sommets (9a) des alvéoles (9) sont situés à l'intersection du plan formé par les faces arrière (7a) des crans (7) et de la surface extérieure du manchon (4).

3. Joint selon la revendication 1 ou 2, caractérisé en ce qu'une gorge (6) est prévue entre le manchon (4) et le premier pli du soufflet.


## Ansprüche

1. Balgdichtung, bestimmt zur Anordnung zwischen einer Welle (1) und einem die Welle umgebenden Außenelement (2), bei welcher der Balg (3) Eingriffs-und Sperrmittel aufweist, die mit einer an der Innenseite der Bohrung des Außenelements ausgebildeten Hohlkehle (8) zusammenwirken, wobei die Sperrmittel durch Sperrklinken (7) gebildet werden, die an der Außenseite einer den Balg (3) verlängernden zylindrischen Manschette (4) angeordnet sind und zum Zusammenwirken mit der Hohlkehle (8) bestimmt sind, und die Eingriffsmittel durch eine Schrägfläche (7b) gebildet werden, die auf den Sperrklinken (7) ausgebildet und zum Inneren der Manschette hin geneigt angeordnet und zum Zusammenwirken mit einer Abschrägung (5a) bestimmt ist, die am offenen Ende der Bohrung des Außenelements (2) angeordnet ist, dadurch gekennzeichnet, daß die Sperrklinken (7) voneinander durch Hohlzellen (9) getrennt sind, wobei jede Hohlzelle die Form eines Kegelteils besitzt und ihre konkave Oberfläche nach außen gerichtet ist, derart, daß eine elastische Deformation der Manschette (4) beim Eingriff der Letzteren in das Innere der Bohrung des Außenelements ermöglicht wird.

2. Dichtung nach Anspruch 1, dadurch gekennzeichnet, daß die Spitzen (9a) der Hohlzellen (9) auf der Schnittlinie der durch die hinteren Flächen (7a) der Sperrklinken (7) gebildeten Ebene mit der äußeren Oberfläche der Manschette (4) liegen.

3. Dichtung nach Anspruch 1 oder 2, dadurch gekennzeichnet, daß zwischen der Manschette (4) und der ersten Falte des Balgs eine Hohlkehle (6) angeordnet ist.


## Claims

1. Bellows seal (3) intended to be inserted between a shaft (1) and an external element (2) surrounding the shaft, the bellows seal (3) comprising stoppage and engagement means cooperating with a throat (8) formed inside the bore of the external element, the stoppage means being constituted by notches (7) formed on the outside of a cylindrical sleeve (4) extending the bellows seal (3) and intended to cooperate with the throat (8), whereas the engagement means are constituted by a ramp (7b) formed on the notches (7) and slanted towards the inside of the sleeve and intended to cooperate with a chamfer (5a) embodied at the open extremity of the bore of the external element (2), wherein the notches (7) are separated from one another by cavities (9), each cavity having the shape of a cone portion and its concave face orientated outwardly so as to allow for an elastic deformation of the sleeve (4) when engaging this sleeve inside the bore of the external element.

2. Bellows seal according to claim 1, wherein the tops (9a) of the cavities (9) are situated at the intersection of the plane formed by the rear faces (7a) of the notches (7) and the external surface of the sleeve (4).

3. Bellows seal according to claim 1 or 2, wherein a throat (6) is provided between the sleeve (4) and the first fold of the bellows seal.

# FIG. 1

# FIG. 2

# FIG. 3